(19)

Europäisches
Patentamt
European
Patent Office
Office européen
des brevets

(11) **EP 3 826 368 A1**

(12) **EUROPEAN PATENT APPLICATION**

(43) Date of publication:
26.05.2021 Bulletin 2021/21

(51) Int Cl.:
*H04W 52/02* $^{(2009.01)}$

(21) Application number: 19306484.7

(22) Date of filing: 19.11.2019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicants:
• **Commissariat à l'énergie atomique
et aux énergies alternatives
75015 Paris (FR)**
• **Sapienza University of Rome
00185 Roma (IT)**

(72) Inventors:
• **DI PIETRO, Nicola
38054 Grenoble (FR)**
• **CALVANESE STRINATI, Emilio
38054 Grenoble (FR)**
• **MERLUZZI, Mattia
00136 Rome (IT)**

(74) Representative: **Brevalex
95, rue d'Amsterdam
75378 Paris Cedex 8 (FR)**

(54) **ENERGY EFFICIENT DISCONTINUOUS MOBILE EDGE COMPUTING WITH QUALITY OF SERVICE GUARANTEES**

(57)    The invention relates to a multi-access edge computing method having a required Quality of Service, QoS, and being implemented in a wireless network which includes at least one electronic device (UE) that can offload a computing task, at least one access terminal (AP) which can be switched between an active mode and a sleeping mode and at least one edge computation unit (MEH) which can compute an offloaded computing task and be switched between an active mode and a sleeping mode.

The method comprises allocating, by a computer-implemented scheduler, communication and computation resources by switching the at least one access terminal and the at least one edge computation unit between their respective active or sleeping modes. Said allocation is performed to minimize a joint energy consumption while guaranteeing the required QoS, the joint energy consumption corresponding to $\alpha E_A + \beta E_M + \gamma E_U$ with $\alpha$, $\beta$ and $\gamma$ each between 0 and 1, $E_U$ the energy consumption of the at least one electronic device, $E_A$ the energy consumption of the at least one access point and $E_M$ the energy consumption of the at least one edge computing unit.

FIG. 2

EP 3 826 368 A1

**Description**

**TECHNICAL FIELD**

The field of the invention is that of edge computing which extends cloud computing to the edge of a wireless network using computing devices for instance deployed at the access nodes. Edge computing includes developments toward mobile network applications (i.e. mobile edge computing) and Internet of Things-focused applications (i.e. fog computing).

**BACKGROUND ART**

In modern telecommunication networks, the paradigm of mobile devices has been reversed from pure communication to joint communication and cloud support (storage, computing). As a consequence, handsets' and small devices' battery life is today limited by computational efforts more than by communication efforts. Offloading computational tasks from User Equipments, UEs (such as end-user handsets or devices, mobile terminals, smartphones or sensors), Internet-of-Things (IoT) devices (such as sensors or industrial IoT systems) or small access points to "the cloud" is seen as an effective solution to limit their energy consumption. Nevertheless, computation offloading comes at the expense of generating extra communication load with both uplink and downlink offloading traffic. The corresponding communication costs increase with the distance between the UE and the cloud gateway.

In this context, a game changing idea consists in empowering local access points (hereafter small cells, but the same applies to other kinds of access points) with intensive data elaboration and storage capabilities, thus bringing cloud support the closest possible to users. This paradigm is called Multi-access (or Mobile) Edge Cloud (or Computing) (MEC).

In MEC networks, Serving Small Cells (SSCs) endowed with radio access technology, computing units and local cache memories can run computing tasks on UEs' behalf. Then the execution of computationally heavy applications can be transferred (offloaded) from a user device to a server, which in the case of MEC is called Mobile Edge Host (MEH). Offloading applications is convenient for different reasons, e.g. the reduction of energy consumption at the UE's side which enables resource-limited devices to run sophisticated applications and the possibility of providing low-latency applications and services due to the close proximity of edge servers to mobile end users.

However, an undesired consequence in the growth of wireless edge cloud networks is the associated energy consumption as the joint operation of computational and communication resources causes energy consumption even when such resources are not used in a specific moment and/or location.

The possibility of exploiting sleeping modes to reduce energy consumption has been studied in the literature.

For instance, in L. Chen, S. Zhou, and J. Xu, "Energy efficient mobile edge computing in dense cellular networks," in Proc. IEEE ICC, May 2017, pp. 1-6, joint computation offloading and Access Point (AP) sleeping decisions are made in order to maximize the quality of service while keeping the energy consumption low. Only the AP sleeping mode is considered and the radio and computation resources are allocated to minimize the long-term average delay under an average power budget constraint.

In S. Wang, X. Zhang, Z. Yan, and W. Wenbo, "Cooperative edge computing with sleep control under nonuniform traffic in mobile edge networks," IEEE Internet of Things J., vol. 6, no.3, June 2019, the authors consider a MEC network aimed at minimizing the long-term average energy consumption under a delay constraint, using a MEC sleep control.

In P. Chang and G. Miao, "Resource provision for energy-efficient mobile edge computing systems," in Proc. of IEEE GLOBECOM, 2018, pp. 1-6, the energy consumption is minimized under a mean service delay constraint, optimizing the number of active base stations and the computation resource allocation at the edge server, while considering a sleep mode for both APs and MEHs.

In all these solutions there is however a lack of a holistic management of the sleeping modes and resource allocation for both computation and transmission. Moreover, all these solutions are network-centric, meaning that the users' energy consumption is not taken into account in the optimization, so that the uplink phase of the offloading process is not optimized.

**SUMMARY OF THE INVENTION**

The invention aims at providing an energy efficient jointly optimized management of both communication and computing resources capable to provide a required quality of services.

To this purpose, the invention discloses a multi-access edge computing method method having a required Quality of Service, QoS, and being implemented in a wireless network which includes at least one electronic device UE that can offload a computing task, at least one access terminal AP which can be switched between an active mode and a sleeping mode and at least one edge computation unit MEH which can compute an offloaded computing task and be switched between an active mode and a sleeping mode. Said method comprises allocating, by a computer-implemented scheduler, communication and computation resources by switching the at least one access terminal and the at least one edge computation unit between their respective active or sleeping modes. Said allocating is performed to minimize a joint energy consumption while guaranteeing the required QoS, the joint energy consumption corresponding to $\alpha E_A$ + $\beta E_M$ + $\gamma E_U$ with $\alpha$, $\beta$ and $\gamma$ each between 0 and 1, $E_U$ the energy consumption of the at least one electronic device, $E_A$ the energy consumption of the at least one access point and $E_M$ the energy consumption of the at least one edge computing unit.

Some preferred, although non-limitative embodiments of this method are as follows:

- said allocating comprises finding, at consecutive time slots, a solution to an optimization problem having the required QoS as constraint, said optimization problem being the minimization of the joint energy consumption, said solution includes the mode, active or sleeping, in which each of the at least one access terminal and the at least one edge computing unit is to be switched during the time slot and said switching the at least one access terminal and the at least one edge computation unit between their respective active or sleeping modes is performed at each of the consecutive time slots based on the corresponding solution;
- said finding comprises performing a Lyapunov optimization considering for each of the at least one electronic device a queue which increases when a constraint on the required QoS is violated;
- performing the Lyapunov optimization comprises minimizing a drift-plus-penalty function in each time slot, wherein the penalty is derived from the joint energy consumption;
- said finding comprises, at the beginning of each of the consecutive time slots, duplicating the optimization problem into sub-problems for which the mode, active or sleeping, in which each the APs and MEHs is to be switched during the time slot is previously set and solving the sub-problems;
- at each of the consecutive time slots said finding comprises:

    ◦ the current mode, active or sleeping, of each of the at least one access terminal and the at least one edge computation unit ($I_A(t)$, $I_M(t)$);

    ◦ a current uplink transmission rate $\left(R_k^u(t)\right)$ and a current downlink transmission rate $\left(R_k^d(t)\right)$ for wireless communications between each of the at least one electronic device and each of the at least one access terminal;
    ◦ for each of the at least one edge computing unit, a current computational power ($f_k(t)$) assigned to each of the at least one electronic device.

- the required QoS is guaranteed if a computation offloading delay is below a threshold;
- the computation offloading delay is a per-task delay or an average delay calculated over several tasks;
- the required QoS is guaranteed if a computation offloading workload is below a threshold;
- the computation offloading workload is a cumulative workload of the at least one electronic device, the at least one access terminal and the at least one edge computation unit;
- the workload of the at least one electronic device is a length of a queue of offloaded data waiting to be transmitted to the at least one access terminal, the workload of the at least one access terminal is a length of a queue of computation result data waiting to be transmitted to the at least one electronic device and the workload of the at least one edge computing unit is a length of a queue of offloaded data waiting to be processed, and wherein the cumulative workload is the cumulative length of all the queues;
- $\alpha=\beta$ and $\gamma=1-\alpha$ or $\alpha=\delta*\varepsilon$, $\beta=\delta*(1-\varepsilon)$ and $\gamma=1-\delta$ with $\delta$ and $\varepsilon$ each between 0 and 1.

## BRIEF DESCRIPTION OF THE DRAWINGS

Some aspects, goals, advantages and features of the invention will be better understood from reading the following detailed description of preferred embodiments thereof, given as a non-limitative example and made with reference to the accompanying figures, in which:

- figure 1 shows a wireless network architecture in which the method of the invention can be implemented;
- figure 2 shows a user-centric approach of the invention in which only the UEs energy consumption is taken into account:
- figure 3 shows a network-centric approach of the invention in which only the APs and MEHs energy consumption is taken into account:
- figure 4 illustrates variables calculated by the scheduler when solving the energy minimization problem given the incoming offloading requests, the communication and computation resource allocation parameters and the QoS constraint;

- figure 5 illustrates a queuing model that can be used in the invention.

**DETAILED DESCRIPTION**

The invention relates to a multi-access edge computing method implemented in a wireless network that includes at least one electronic device, at least one access terminal and at least one edge computation unit. In such a method, an electronic device offloads a computational task to an access terminal, an edge computation unit (or a cluster of edge computation units) executes the computational task on the electronic device's behalf and then the result of the execution is sent back to the electronic device by an access terminal.

The at least one electronic device may consist of one or more UEs (end-user handsets or devices, mobile terminals, smart phones, sensors, etc.), IoT devices (sensors, industrial IoT systems) or small access points.

The at least one access terminal may consist of one or more access points, APs (macro base stations, relays, femto cells, pico cells, etc.). The access points can be static or mobile. They are typically deployed over a given geographical region and can be connected to each other via direct (wired or wireless) high-capacity backhaul.

The at least one edge computation unit may consist of one or more mobile edge hosts (MEH), each being typically associated to one or more APs. In practice, the APs are "cloud enhanced", i.e. they are endowed with computational (and possibly storage) capabilities. In particular, each AP has access to one or more machines/servers (typically co-located with the APs themselves or in their proximity) that can perform computational tasks. Each AP can have its own MEH, but some APs may also share a common MEH. The case that some APs are not "cloud enhanced" is therefore included in the invention.

In the following, UE designates an electronic device, AP designates an access terminal and MEH designates an edge computing unit.

The multi-access edge computing method comprises:

- an uplink data transmission step which comprises transmitting a computational task offloaded by a UE to at least one AP and which involves an energy expenditure at the UE,
- a computation step which comprises calculating, by at least one MEH, a task result for the offloaded computational task and which involves an energy expenditure at the MEH,
- a downlink data transmission which comprises transmitting the task result to the UE by at least one AP and which involves an energy expenditure at the AP.

APs and MEHs can both be switched between an active mode and a sleeping mode. This switching can be done with dedicated signalling or with on-device mechanisms that detect the need for activating/deactivating the device.

In the active mode, the sources of energy consumption at the network elements' side (APs and MEHs) are twofold:

- a "static" energy expenditure, due to the simple fact that the AP or the MEH is on and active;
- a load-dependent energy expenditure for both communication (AP) and computation (MEH), which changes with the traffic and intensity of the workload of APs and MEHs.

The sleeping mode is a low-power mode with static energy expenditure (much) lower than that of the active mode.

Hence, both the APs and the MEHs power consumption P can be written as:

$P = (P_0 + P_{load})I_{active} + P_{sleep}(1 - I_{active})$, where $P_0$ is a static power consumed only for being active, $P_{load}$ is a load dependent term, $P_{sleep}$ is a static term consumed in the sleeping mode, while $I_{active}$ is 1 if and only if the network entity (AP or MEH) is in active state.

For the UEs, we consider the energy expenditure of the radio transmission in the uplink direction to enable the offloading. The energy cost for a UE can also include a local computation power consumption in case the UE run some tasks (or subtasks) locally.

As detailed hereafter, the invention provides an energy efficient edge computing method that implements joint sleep mode strategies at the APs and the MEHs for ensuring both communication (thus the uplink and downlink data transmission steps) and computation (the computation step). This method is implemented in a network architecture which is characterized by the following features:

1. For each AP and MEH, the sleeping mode can be switched on whenever they do not have to serve any UE.

2. For every AP and its MEHs, the activation and deactivation of their sleeping mode is jointly coordinated in order to optimize their joint energy consumption (thus aiming at maintaining active the smallest possible number of APs and MEHs) without violating the constraints on the quality of service of the offloaded task (the edge cloud service with which the task is associated). This succession of sleeping and active modes over consecutive time periods is called the duty cycles of the APs and the MEHs.

3. Computation offloading instances from the UEs can be managed in order to optimize the duty cycles of the APs and MEHs. More precisely, the uplink data transmission from UEs to APs and MEHs, the computing activity of MEHs, the downlink data transmission from MEHs to APs are orchestrated to minimize the activity periods of all the involved electronic devices and network elements.

4. Groups of federated APs and MEHs can offload computational tasks to each other, in order to exploit at most those who are in active mode and switch to sleeping mode those whose activity is not strictly required by the global network workload.

5. The architecture may also include the possibility of coordination between the duty cycles of the APs and MEHs and the duty cycles of the served UEs.

In the method of the invention, clusters of APs and MEHs can be created to achieve low energy expenditure solutions. Different criteria can be used to form a certain cluster. The parameters to be taken into account to form a cluster are the radio and computational load of the UEs. The aim is to minimize the number of APs and MEHs necessary to accommodate all the offloading requests with the desired quality of service and minimum energy consumption. Cluster formation can be fixed or re-organized over time if the load conditions change both in terms of radio and computation aspects.

In the method of the invention, the task computation can be performed at the MEHs located with the APs used for the radio access or at other MEHs. In addition, if the application allows it, tasks can be split into parallel subtasks, run in more than one MEH and/or partially run locally by the UEs and partially offloaded. The decision on where to compute the task depends on computational load conditions of the MEHs, and on backhaul conditions between APs and MEHs in case the application is offloaded to a different MEH not co-located with the AP used for the radio access or is computed in parallel in more than one MEH.

In the method of the invention, the download of the computation results can be performed through the same AP used for task offloading, or through one or more different APs.

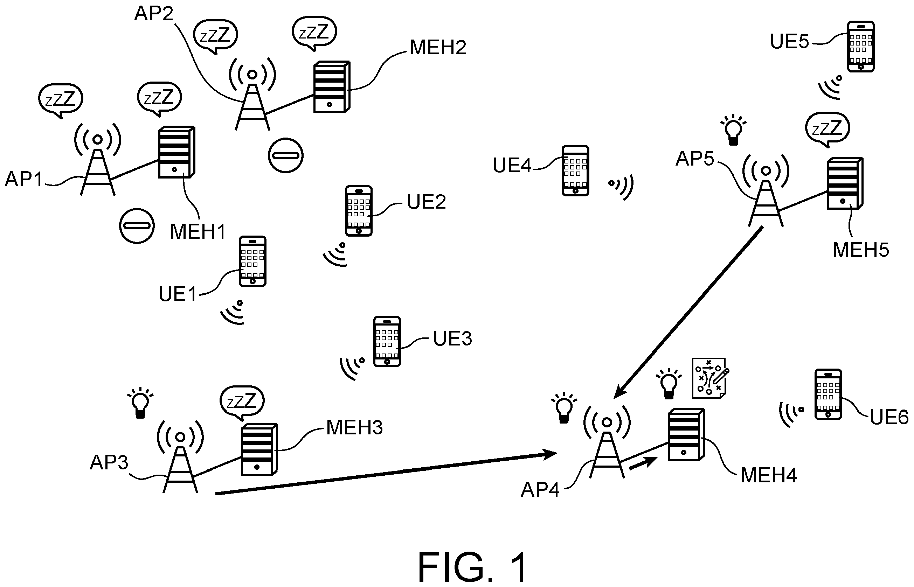

Figure 1 shows a wireless network architecture in which the method of the invention can be implemented. The network comprises electronic devices UE1-UE6, access terminals AP1-AP5 and edge computing units MEH1-MEH6. In this example, access terminals AP1 and AP2 are in their sleeping mode, access terminals AP3, AP4, AP5 are in their active mode and the edge computing units are all in their sleeping mode except edge computing unit MEH4. As shown by the arrows, edge computing unit MEH4 is capable of computing tasks offloaded by the electronic devices and which are relayed to it either directly by access terminal AP4 or indirectly by access terminal AP3 or AP5 cooperating with access terminal AP4 as their respective edge computing units MEH3 and MEH5 are in sleeping mode.

As already mentioned, computation offloading comprises one uplink transmission phase from a UE, one computation phase at a MEH, and one downlink transmission phase from a AP. Each of these phases is a source of delay and a source of energy consumption. In the invention, the three sources of energy consumption are jointly taken into account as a joint energy consumption. The three sources of delay are also jointly taken into account as a joint delay which can be representative of the provided quality of service. In the invention, the distribution of the communication and computational load and the duty cycles are optimized to provide the service with the required quality and minimum joint energy consumption.

The method according to the invention more particularly implements a mixed user- and network-centric strategy in which allocation of communication and computation resources (thus whether the APs and the MEHs are to be turned to their active mode or sleeping mode) is orchestrated for energy efficient computation offloading with QoS guarantees. This strategy can be described by the following general problem (P):

$$\min \{ \alpha E_A + \beta E_M + \gamma E_U \} \text{ subject to QoS constraint} \qquad (P)$$

with $\alpha$, $\beta$ and $\gamma$ each between 0 and 1, $E_U$ the energy consumption of the at least one electronic device and $E_N$ an energy consumption of the wireless network based upon the energy consumption of the at least one access point and/or the energy consumption of the at least one edge computing unit.

In a possible embodiment, $\alpha = \beta$ and $\gamma = 1-\alpha$ and the problem is therefore:

$$\min \{ \alpha(E_A + E_M) + (1- \alpha)E_U \}$$

subject to QoS constraint.

In other possible embodiment, the energy consumption of the two different network entities is weighted, for instance to take into account that the mobile network and the MEC network could be run by to different operators, and

we take $\alpha=\delta^*\varepsilon$, $\beta=\delta^*(1-\varepsilon)$ and $\gamma=1-\delta$ with $\delta$ and $\varepsilon$ each between 0 and 1 so that the problem is therefore:

$$\min \left\{ \delta\left(\varepsilon E_A + (1-\varepsilon)E_M\right) + (1-\delta)E_U \right\}$$

subject to QoS constraint.

The QoS constraint on the edge service can be defined via different metrics, such as a delay constraint (per task-delay constraint, average delay constraint, queueing delay constraint), a reliability constraint (in terms of communication and/or computation aspect) or a multi-parameter constraint.

As shown below, the delay constraint may be such that the required QoS is guaranteed if a (deterministic or probabilistic) computation offloading delay is below a threshold. The computation delay may be a per-task delay or an average delay calculated over several tasks.

As also detailed below, the reliability constraint may be such that the required QoS is guaranteed if a (deterministic or probabilistic) computation offloading workload is below a threshold. The computation offloading workload may be a cumulative workload of the at least one electronic device, the at least one access terminal and the at least one edge computation unit. In a possible embodiment, the workload of the at least one electronic device is a length of a queue of offloaded data waiting to be transmitted to the at least one access terminal, the workload of the at least one access terminal is a length of a queue of computation result data waiting to be transmitted to the at least one electronic device and the workload of the at least one edge computing unit is a length of a queue of offloaded data waiting to be processed, the cumulative workload being the cumulative length of the three queues.

More precisely, the QoS constraint can be formalized as follows, depending on the chosen mathematical model to represent computation offloading (the following list is not exhaustive, can be extended to other models and the models themselves can be made more complex to include other specific details of the offloading procedure):

- Let $D_{UL}(c)$ be the time delay needed for the uplink phase of the computation offloading procedure of a computational task $c$. Similarly, let $D_{comp}(c)$ be the computational delay needed for the execution of the task at the MEH and let $D_{DL}(c)$ be the delay required for the downlink phase of the computation offloading procedure. The per-task computation offloading delay can then be modelled as

$$D(c) = D_{UL}(c) + D_{comp}(c) + D_{DL}(c),$$

and a deterministic per-task delay constraint can be expressed as $D(c) \leq \Delta$ for some $\Delta > 0$ that can be constant for all tasks or differ from task to task (or from user to user). The per-task delay constraint can also be expressed probabilistically as

$$\mathcal{P}(D(c) >$$

$\Delta$ ) $\leq \varepsilon$, for some $\varepsilon > 0$ as small as required. This probability depends on the random parameters that cannot be controlled by the network (e.g. the channel quality or the effective computation time), but can be maximized via a suitable choice of the system variables (uplink and downlink transmission rates, allocated computational power at the MEH). Delay constraints can be also expressed as (long-term) averages over several cumulated offloading requests, both deterministically and probabilistically:

$$\frac{1}{P}\sum_{p=1}^{P} D(c_p) \leq \Delta$$

$$\mathcal{P}\left(\frac{1}{P}\sum_{p=1}^{P} D(c_p) > \Delta\right) \leq \epsilon$$

- QoS constraints can be imposed as requirements on queues which model the communication and computation cumulative workload (proportional to the overall service delay) at the UEs, the APs and the MEHs. With each UE, AP, and MEH, we can associate queues of bits, of packets or of whole offloadable tasks inputs and outputs that are on hold, waiting to be transmitted (in uplink from a UE to an AP and downlink from an AP to a UE) or to be processed (at a MEH). Hence, constraints on queues can be expressed either deterministically or probabilistically, can be imposed as average constraints on a series of tasks, can concern strictly the length of each queue or, less strictly, the sum of the communication and computation queues associated with the same flow of packets or tasks of a UE. Let $Q^l(t)$ be the local queue at the UE at time $t$, containing bits, packets or task inputs that have to be uploaded to the edge cloud. Let $Q^M(t)$ be the queue of bits, packets or tasks that are waiting to be processed by the MEH. And let $Q^A(t)$ be the queue of bits, packets, or task outputs that are waiting to be sent back to the UE from the AP. Then, QoS constraints on queue lengths can be expressed in one of the following (non-exhaustive) ways:

$$Q^l(t) \leq L^l, \quad Q^M(t) \leq L^M, \quad Q^A(t) \leq L^A, \quad \forall t$$

$$Q^l(t) + Q^M(t) + Q^A(t) \leq L, \quad \forall t$$

$$\mathcal{P}(Q^l(t) > L^l) \leq \epsilon, \quad \mathcal{P}(Q^M(t) > L^M) \leq \epsilon, \quad \mathcal{P}(Q^A(t) > L^A) \leq \epsilon, \quad \forall t$$

$$\mathcal{P}(Q^l(t) + Q^M(t) + Q^A(t) > L) \leq \epsilon, \quad \forall t$$

$$\frac{1}{T}\sum_{t=1}^{T} Q^l(t) \leq L^l, \quad \frac{1}{T}\sum_{t=1}^{T} Q^M(t) \leq L^M, \quad \frac{1}{T}\sum_{t=1}^{T} Q^A(t) \leq L^A$$

$$\frac{1}{T}\sum_{t=1}^{T}\left(Q^l(t) + Q^M(t) + Q^A(t)\right) \leq L$$

$$\frac{1}{T}\sum_{t=1}^{T}\mathcal{P}(Q^l(t) > L^l) \leq \epsilon, \quad \frac{1}{T}\sum_{t=1}^{T}\mathcal{P}(Q^M(t) > L^M) \leq \epsilon, \quad \frac{1}{T}\sum_{t=1}^{T}\mathcal{P}(Q^A(t) > L^A) \leq \epsilon$$

$$\frac{1}{T}\sum_{t=1}^{T}\mathcal{P}(Q^l(t) + Q^M(t) + Q^A(t) > L) \leq \epsilon$$

The previous conditions can also be combined to enforce stricter QoS constraints: for example $Q^l(t) \leq L^l$, $Q^M(t) \leq L^M$, $Q^A(t) \leq L^A$, and $\frac{1}{T}\sum_{t=1}^{T}\left(Q^l(t) + Q^M(t) + Q^A(t)\right) \leq L$ can be imposed altogether; the first three guarantee that no buffer overflow happens and the latter models and controls the overall delay.

- QoS constraints can also be based on task dropping rates over a series of offloading requests or time slots. In particular, in some applications, adopting the queuing model briefly exposed before, we can suppose that some bits or tasks are dropped out of the queue if they are not transmitted/processed within a certain amount of time, thus causing the failure of the corresponding computation offloading instance. A given QoS constraint can be imposed as a threshold of the acceptable dropping rate. Again, such a constraint can be formulated as a deterministic condition over a certain amount of service time (or over a set of tasks) or as a probabilistic condition.
- Let us consider applications for which the results of tasks can be obtained with different precision or detail or definition, depending on the amount of computational resources allocated to run the task during a fixed-length time slot (or a sequence of time slots). These applications include, for example, image/video recognition, reconstruction, or processing, video gaming and extended reality, etc. For such applications, a higher-quality or more precise task result can be obtained when a higher computational power is allocated to run the task. Therefore, they allow the formulation of QoS constraints as minimum requirements on the task output. For example:

  ◦ When the task output is a video, QoS constraints can require a minimum amount of frames per second;
  ◦ When the task output is an image, QoS constraints can require a minimum quality, measured for example in dot per inch;
  ◦ When the task output is the "answer" to a question based on image/video recognition (e.g.: how many cars appear in this video? How many people are sitting in this picture?), QoS constraints may impose a level of confidence of the answer itself. For instance, the UE may ask for the allocation of enough resources to process the video or picture so that the answer is given with, say, a level of 90% or 99% or 99.99% of certainty, assuming that in these cases a higher available computational power allows to run more precise processing algorithms.

In the above general problem (P), the term $\alpha$ is used to assign priority to the UEs or network energy consumption. A user-centric strategy and a network-centric strategy can be performed by choosing $\alpha = 0$ and $\alpha = 1$, respectively. Through this parameter, hybrid strategies can be implemented.

The values of $\alpha$ (and $\beta$ if any) chosen for the energy minimization (i) can be extracted from a look-up table that specifies in which scenarios the energy minimization priority has to be given more to UEs or to the network, (ii) can be learnt based on historical data, (iii) can directly depend on the number of UEs in the network; (iv) can be tuned to enforce the power requirements demanded by UEs; (v) can be dependent on the battery energy levels of UEs; (vi) can be estimated or mathematically derived to ensure that the network energy costs do not exceed a certain threshold fixed by the infrastructure owner or the mobile operator.

In the user-centric approach, only the UE energy consumption is taken into account, so that the optimal pair AP-MEH in terms of energy consumption for the user and QoS constraints is selected and set in the active mode. In other words, the UE imposes its best APs and MEHs to switch to active mode in order to be served when it is more convenient for it in terms of energy consumption. In this way, the APs and MEHs are forced to be active according to a duty cycle (traffic shaping) decided by the UE (based on application requirements, channel conditions, etc.).

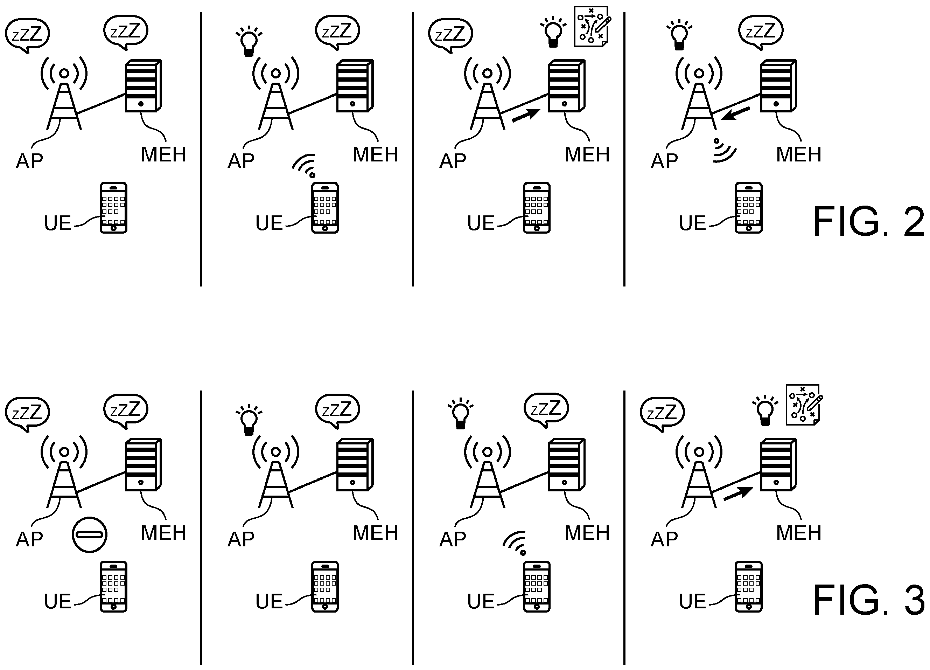

Figure 2 illustrates this user-centric approach. In a first step, the AP and MEH are in their sleeping mode. In a second step, the AP is forced to be active so as to receive a computing task offloaded by the UE, while the MEH remains sleeping. In a third step, the AP is turned back to its sleeping mode, while the MEH is forced to be active so as to compute the offloaded task. Then in a fourth step, the AP is forced to be active so as to transmit the result of the computation to the UE, while the MEH is turned back to its sleeping mode.

In the network-centric approach, the duty cycle is imposed by the network, with the aim of minimizing its overall energy consumption (APs and MEHs), while still guaranteeing the quality of service for the end users. In this case, the APs and the MEHs switch to active state only when it is needed according to the application requirements, optimizing the inactive time to save energy.

Figure 3 illustrates this user-centric approach. In a first step, the AP and MEH are in their sleeping mode. In a second step, the AP is forced to be active, while the MEH remains sleeping. In a third step, the AP receives a computing task offloaded by the UE. In a fourth step, the AP is turned back to its sleeping mode, while the MEH is forced to be active so as to compute the offloaded task.

In the hybrid approach, the energy efficiency optimization is tuned to give certain priorities to the three sources of energy consumption, leading to an intermediate solution between the user-centric and the network-centric approach.

In a first step of the method, based on the delay constraints of the application and on the available power budget, each UE takes a decision on whether or not requesting to offload a computational task. In general, the offloading decision is taken task by task, but, in case of a running application with parallelizable subtasks, it can be split into a subtask-by-subtask decision. The decision can be taken in different ways, depending on how the offloading energy consumption is estimated or measured.

In a possible embodiment, the energy consumption (energy profiler) required by the UE to run on the device a specific task or a sub-task can be either (i) estimated based on past observation on the device, (ii) estimated given a model associated with specific parameters of the device, (iii) guessed given momentary information on the set of task to offload such as for instance the size of the data to transmit or (iv) suggested by the edge cloud using a database that is not directly accessible at the device. Similarly, the overall predicted delay can be retrieved by the current computational load at the device, through empirical models or prediction algorithms based on machine learning techniques or Artificial Intelligence (AI).

For instance, each user can have a table with some specific application requirements with the corresponding computation resource utilization and energy consumption. Alternatively, the UE can request the MEC network to predict the energy consumption and the delay to run the application locally at the device, based on hardware capabilities, computational demand, etc.

Three general criteria for the offloading decision are typically the following ones:

1. When energy consumption is the main concern, offloading is requested whenever the overall offloading procedure is estimated to have a lower energetic cost than running the task at the UE, provided that it happens within a certain maximum delay.

2. When time is the main concern, offloading is requested whenever the overall offloading procedure is estimated to happen faster than the local computation of the task result (thanks to high-rate communications and the higher computational capacity of the edge cloud with respect to the UE), provided that the corresponding energetic costs remain within a maximum threshold.

3. In IoT applications, where the UE has typically very few or no computational power at all, offloading can be performed systematically, whenever necessary.

Moreover, the offloading decision can be also based on or influenced by the knowledge (or estimation or prediction) of the instantaneous realizations of certain random parameters that characterize the system, the communication channels and the offloadable task itself. These parameters may include (and are not necessarily restrained to) the following, and their knowledge allows a more precise estimation of the energetic costs of the offloading procedure:

- The UE's battery level;
- The long-term or short-term current energy consumption, measured during a time window of length as long as needed;
- The quality of the radio link between the UE and the AP through which the UE accesses the network;
- The UE's available computational power;
- The size of the task to be offloaded;
- The amount of computations to be run to find the task output;
- The current local queue status;
- The UE's mobility pattern (specific mobility patterns may prevent the possibility of efficient offloading).

The values of the parameters involved in the offloading procedure, whenever possible, should be obtained via direct measurement. If this is not possible or not feasible on a task-by-task basis, other solutions can be envisaged, in a similar fashion as for the energy consumption: via several strategies for prediction or lookup tables or with the help of the edge cloud.

A straightforward way to take the previous parameters into consideration during the offloading decision is to establish thresholds. Namely:

- If the UE's battery level is less than a threshold, offloading may be always enforced, provided that it has a lower energetic cost than the local computation of the task;
- If the current energy consumption at the UE is exceeding a fixed threshold, then offloading may become preferable or necessary, provided that it has a lower energetic cost than the local computation of the task;
- If the quality of the radio link between the UE and the AP is lower than a fixed threshold, offloading may be excluded: a poor channel gain can lead to poor performance in terms of latency and/or energy consumption;
- If the UE's available computational capacity is less than a given threshold and the UE is already busy with other computations, offloading may be necessary, independently from the energetic costs;
- If the amount of data to offload is too large, offloading may be excluded, because the corresponding communication delay and power costs exceed a fixed threshold;
- If the task to offload requires a lot of computational resources, more than a fixed threshold depending on the UE's computational capacity, offloading may be enforced independently from the related energetic costs or delays.
- In an offloading model involving queues, if the UE's local queue is longer than a fixed threshold length, offloading may be necessary or preferred, to decrease the risk of buffer overflows and congestion at the UE.

The abovementioned thresholds can be set and updated over time based on the UE's experience, on previous measurements, on statistical models, on performance predictions, etc.

In a second step of the method, the channel quality, necessary for taking decisions on offloading, on modulation and coding schemes and on active and sleep modes can be either estimated (for instance through classical channel estimation using pilot signals) or predicted (for instance based on machine learning techniques, AI, etc.).

In a possible embodiment, based on the quality of the received requests for offloading support, the APs may estimate their distance to the UEs and base thereon their estimation of the channel quality. Indeed, the latter is proportional to $d^{-k}$, where d is the distance between the UE and the AP and k corresponds to the path-loss exponent characterizing the channel. $d^{-k}$ can be used as a channel quality indicator. Prediction can be used for the fast fading term.

In another embodiment, for instance if the distance between the UE and the AP cannot be explicitly derived, the AP may simply classify its distance from the UEs as one of several discrete approximates (such as very long, long, medium, short, very short), based on the quality of the received signal.

A third step relates to the task offloading phase. As already explained above, this step involves a dynamic optimization of radio and computation resources, from APs and MEHs selections to scheduling of the radio resources and of the CPU cores of the MEHs.

More precisely, the task offloading comprises allocating, by a computer-implemented scheduler, communication and computation resources by switching the at least one access terminal and the at least one edge computation unit between their respective active or sleeping modes. Said allocation is performed so as to minimize a joint energy consumption while guaranteeing a required Quality of Service, QoS. The joint energy consumption corresponds to $\alpha\ (\beta E_A + (1-\beta)E_M) + (1-\alpha)E_U$ with $\alpha$ between 0 and 1, $\beta$ between 0 and 1, $E_U$ the energy consumption of the at least one electronic device, $E_A$ the energy consumption of the at least one access point and $E_M$ the energy consumption of the at least one edge computing unit.

This offloading procedure is carried out through one or more of the communication links between each UE and the APs. The choice of the most suitable AP (or set of APs) is performed according to the approach (user/network centric), available resources (bandwidth, radio load status), etc. Similarly, the application can be run either in one or more MEHs, in a serial or parallel fashion, depending on the specific scenario and available technologies.

The scheduler can be centralized and handle several APs and MEHs at the same time or can be local and dedicated to a single small cell of the edge cloud.

The scheduler is configured to make decisions about which of the APs and MEHs must be put in active mode to provide the service with the desired performance. Hence, during the task offloading, the at least one access terminal and the at least one edge computation unit can therefore be controlled by the scheduler so as to implement a succession of sleep and active modes over consecutive time slots.

To this purpose, the scheduler may comprise a solver configured to find, at each of consecutive time slots, a solution to an optimization problem (i.e. the minimization of the joint energy consumption) with the required QoS as constraint and given the newly incoming offloading requests. The solution includes the mode, active or sleeping, in which each the APs and MEHs is to be switched during the time slot. And said switching is performed at each of the consecutive time slots based on the corresponding solution.

The optimization is therefore performed in a time-slot-by-time-slot fashion and a dynamic scenario, dividing time in slots of equal or different duration. In a possible embodiment, a cluster of time slots can be dedicated to the solver to re-calculate the "optimal" resource allocation.

As detailed below, in an embodiment, said finding comprises performing a Lyapunov optimization considering for each of the at least one electronic device a queue which increases when a constraint on the required QoS is violated. Performing the Lyapunov optimization may comprise minimizing a drift-plus-penalty function in each time slot, wherein the penalty is derived from the joint energy consumption.

Said finding may comprise, at each of the consecutive time slots, duplicating the optimization problem into sub-problems for which the mode, active or sleeping, in which each the APs and MEHs is to be switched during the time slot is previously set and solving the sub-problems.

The variables that are jointly determined when solving the optimization problem typically include:

- the current mode, active or sleeping, of each of the at least one access terminal and the at least one edge computation unit (i.e. the binary indicator variables characterizing the on/off status of the APs and the MEHs, denoted by $I_A(t)$ and $I_M(t)$, respectively);
- a current uplink transmission rate and a current downlink transmission rate for wireless communications between each of the at least one electronic device and each of the at least one access terminal (i.e. the uplink and downlink transmission rates (bits/s) for wireless communications between each UE and its serving AP. For the $k$-th UE, we denote them by $R_k^u(t)$ and $R_k^d(t)$, respectively);
- for each of the at least one edge computing unit, a current computational power assigned to each of the at least one electronic device (i.e. the computational power assigned to the execution of each task at the MEH, denoted by $f_k(t)$ for the $k$-th UE of the MEH, measured in flops/s, number of CPU cores or an analogous unit depending on the adopted model).

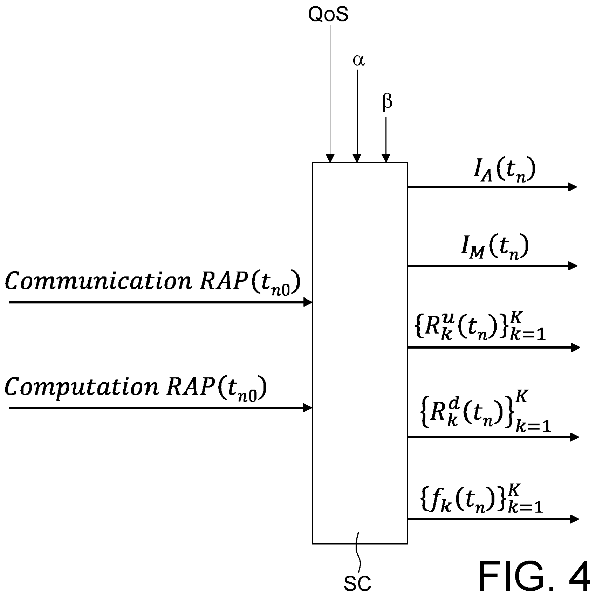

As shown by figure 4, at the beginning of each time slot (at time $t_{n0}$ denoting the beginning of timeslot $t_n$), the scheduler SC gathers communication resource allocation parameters (Communication RAP($t_{n0}$)) and computation resource allocation parameters (Computation RAP($t_{n0}$)) and therefore acquires/updates the available information on the number of associated UEs, the available radio resources (bandwidth and maximum date rate), the available computational capacity, the instantaneous channel quality for every link between a UE and an AP, the instantaneous information about the tasks arrivals and the results of offloaded tasks to be sent back to the UE, the state of existing queues, etc.

The scheduler then solves the energy minimization problem given the incoming offloading requests, the $\alpha$ and $\beta$ parameters in the joint energy consumption model and the QoS constraint, and outputs updated binary indicator variables characterizing the on/off status of the APs and the MEHs for the slot, denoted $I_A(t_n)$ and $I_M(t_n)$ respectively, as well as updated transmission rates $R_k^u(t_n)$ and $R_k^d(t_n)$ for each UE and updated computational power $f_k(t)$ assigned to each UE.

The above set of variables can change and contain more or less additional variables, depending on the way the problem is cast; nevertheless, this does not change the way the proposed Discontinuous-MEC architecture is exploited to coordinate the duty cycles of APs and MEHs to reduce the overall energy consumption.

The abovementioned variables of the problem are also subject to the following feasibility constraints:

1. $I_A \in \{0,1\}$, $I_M \in \{0,1\}$, i.e. the decision variables for the activity of the two entities are binary;

2. $0 \leq R_k^u \leq R_{k,\max}^u \cdot I_A$, $\forall k$, where $R_{k,\max}^u$ is the maximum data rate achievable by the $k$-th UE, given the transmit power budget, the available bandwidth, and the current channel state. Obviously, when $I_A = 0$, no transmission occurs, and the uplink data rate is 0 for all UEs.

3.

$$R_k^d \geq 0, \forall k$$

4. For each AP, $\sum_k R_k^d \leq R_{max}^d \cdot I_A$, where $R_{max}^d$ is the maximum downlink sum data rate. Obviously, when $I_A = 0$, no transmission occurs, and the downlink data rate is 0 for all UEs.

5.

$$f_k \geq 0, \forall k.$$

6. For every MEH, $\sum_k f_k \leq f_{max} \cdot I_M$, where $f_{max}$ is the maximum computational power of the server. Obviously, when $I_M = 0$, no computation takes place, and the computation power is 0 for all UEs.

In case the scheduling is also performed in terms of bandwidth, the number of subcarriers $N_k$ for each UE k can be optimized with the following constraints:

7.

$$N_k \geq 0, \forall k;$$

8. $\sum_k N_k \leq N$, where $N$ is the number of subcarrier available at the AP.

Two kinds of information are typically exchanged between the UEs and the network:

- Fixed parameters: they are exchanged after the offloading decision and before the offloading procedure starts, and include the application requirements in terms of latency, energy consumption, etc. In some cases, these requirements may not be necessarily provided by the UE, since they could be available in a database at the server or estimated from similar applications, thus avoiding the signalling overhead;
- Dynamic parameters: they are continuously exchanged during the application lifetime, and include instantaneous channel states, current average delay incurred for the service, current application queue states in case a queueing model is used. All the dynamic parameters can be exchanged on a time-slot basis, or over a longer term to reduce the signalling overhead, however incurring in suboptimal resource allocation strategies with the benefit of a lower complexity.

Different methods can be exploited for the resource allocation, depending on the model that is used to measure the application requirements and the status of the system. We can distinguish between two main classes of models:

- Pure delay model: the exact delay is measured or estimated and used to take a decision on the resource allocation and, in particular, on the on/off state of the APs and MEHs. In this case, a per-task delay is considered and a time stamp can be used to start measuring the delay that the task is experiencing; when the delay is close to the final deadline, imposed by the application, the offloading process of the task is started, thus allowing to keep the AP in sleep state as much as possible. Denoting by to the time stamp relative to the generation of the task at the mobile side, and by L the final deadline for the task, a possible strategy is the following: keep the AP in sleeping mode until $L-t_0 \geq \delta$, with $\delta$ a threshold chosen by the network. A similar approach can be used for the computing phase of the offloading procedure, keeping the MEH in sleeping mode as long as possible, until its activation becomes necessary to be able to execute the task within the deadline. In such a scenario, the active modes of the AP and of the MEH can be easily "orthogonalized", keeping the MEH off during the communication phase and, vice versa, keeping the AP off during the computing phase.

In a multi-user scenario, when more than one offloading request arrives at the beginning of the time slot, the same strategy can be applied, considering as threshold the minimum that guarantees that all delay constraints are satisfied.

- Queueing model: the delay is described through the length of the communication queues (uplink and downlink) and the computation queues (at the MEHs). In this case, a possible method for solving the problem is to use the current states of the queues as a measure of the congestion of the network. Then, actions are taken to keep this quantity limited, in order to avoid long delays or buffer overflow events. Also in this case, for example, the AP and the MEH can be kept in sleeping mode as far as the queue lengths (separate or the sum of the three) are under a certain threshold, and switched on when the measure of the congestion becomes higher then this threshold. Also in this case, for the same reason as before, the alternation of the active mode between the AP and the MEH can be enforced.

For both models, several suboptimal solutions can be envisaged:

- Disjoint allocation: radio and computation resources, also comprising on/off states of APs and MEHs, are optimized separately, thus leading to a suboptimal solution with possibly lower complexity. In this case, in the queueing model, the queues are treated separately and decisions are taken based on individual congestion states of the three queues.
- Disjoint optimization between indicator variables and resource allocation: the resource allocation procedure takes place only after deciding the current on/off state of the network entities.
- Equal resource allocation: radio and/or computation resources can be equally allocated. In all cases in which the application demand and requirements are similar among different users, this solution is not far from the optimal.
- Periodic on state of APs and MEHs: the active state of the two entities is periodic in order to guarantee a certain duty cycle to reduce energy consumption, thus leading to a lower complexity with the a priori decision on $I_A$ and $I_M$. The period is chosen based on the current load of the network, both in terms of communication and computation aspects. The simplest way to apply this strategy is to periodically repeat this sequence of events over three time slots: i) time slot 1: uplink transmission phase (AP on, MEH off); ii) time slot 2: computing phase (AP off, MEH on); iii) time slot 3: downlink communication phase (AP on, MEH off).
- A single indicator variable can be used for both AP and MEH, thus constraining them to work at the same time. This method reduces the complexity while leading to suboptimal solutions.

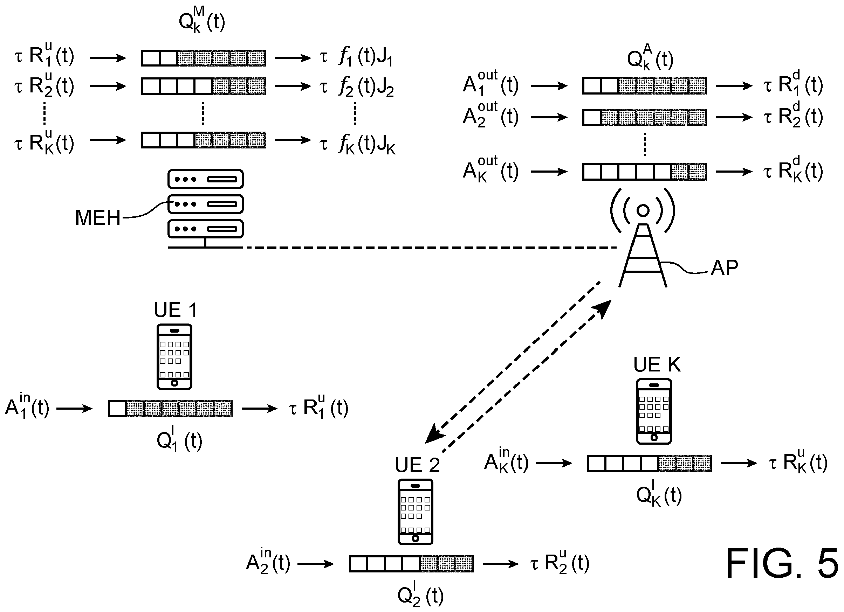

In the following, as shown on figure 5, we consider a system with K UEs UE 1, UE 2, ...UE K, one AP, and one MEH. The UEs offload computational tasks to the MEH via their wireless connection with the AP. Then, the MEH computes the task results and the latter are sent back to the UEs, again via the AP. We assume that the AP and the MEH are connected through a high-capacity backhaul, entailing no queuing delay at the backhaul. This hypothesis can be straightforwardly generalized, including an additional backhauling queue between the AP and the MEH.

UEs power consumption model

The energy consumption considered for the UEs is the uplink transmission energy, so that the total energy consumption of all UEs in a time slot $t$ of length $\tau$ seconds is given by $E_U(t) = \tau \sum_{k=1}^{K} p_k^u(t),$ where $p_k^u(t)$ is the uplink transmit power of UE k, and K is the total number of UEs.

Here, for simplicity, the possibility of orchestrating also the UE's duty cycle is not taken into account. Nevertheless, this can be done by a straightforward generalization of the UE's energy consumption model and the solution of the energy optimisation problem presented below.

AP consumption model

The AP consumes a static power $P_A^{on}$ just for being in the active mode, and a power $P_A^{sleep}$ in the sleeping mode. Moreover, when the AP is active, the power spent for downlink transmission is $P_d(t) = \sum_k p_k^d(t)$, where $p_k^d(t)$ is the transmit power used to serve the k-th UE.

Thus, the overall energy consumption of the AP in each time slot $\tau$ can be written as:

$$E_A(t) = \tau \left( P_A^{on} I_A(t) + P_A^{sleep} \left( 1 - I_A(t) \right) + P_d(t) \right),$$

with $I_A(t) = 1$ if and only if the AP is in its active mode and $P_d(t) = 0$ when $I_A(t) = 0$, because no transmission occurs when the AP is in idle state.

Given a frequency division multiple access system, the maximum achievable data rate $R_k^d(t)$ in downlink for the k-th served UE during time slot t is given by:

$$R_k^d(t) = B_k^d(t) log_2 \left( 1 + \frac{p_k^d(t) h_k^d(t)}{B_k^d(t) N_0} \right),$$

where $B_k^d(t)$ is the bandwidth allocated to the k-th UE, $h_k^d(t)$ is the channel's power gain, and $N_0$ is the noise power spectral density.

Then, the overall energy consumption of the AP in a time slot $t$ of length $\tau$ seconds can be written as:

$$E_A(t) = \tau \left( P_A^{on} I_A(t) + P_A^{sleep} \left( 1 - I_A(t) \right) + \sum_{k=1}^{K} \left[ \left( \exp\left( \frac{R_k^d(t) \log(2)}{B_k^d(t)} \right) - 1 \right) \frac{B_k^d(t) N0}{h_k^d(t)} \right] \right),$$

with $R_k^d(t) = 0$ when $I_A(t) = 0$ because no transmission occurs when the AP is in idle state.

MEH consumption model

Similarly to the AP's case, the MEH consumes a static power $P_M^{on}$ just for being in the active mode, and a power $P_M^{sleep}$ in the sleeping mode. Moreover, when the MEH is active, we model the power spent for computation as $P_{comp}(t) = \gamma f^3(t)$, where $f(t)$ is the CPU cycle frequency used during time slot $t$ and $\gamma$ is the effective switched capacitance of the processor. We suppose that it is possible to use dynamic voltage frequency scaling to scale down the frequency, thus reducing the power consumption. Then, the overall energy consumption in a time slot $t$ of length $\tau$ is given by

$$E_M(t) = \tau \left( P_M^{on} I_M(t) + P_M^{sleep} \left( 1 - I_M(t) \right) + P_{comp}(t) \right),$$

with $P_{comp}(t) = 0$ when $I_M(t) = 0$, because no frequency is allocated for computation when the MEH is in sleep state.

Application queue model

To study the delay performance of computation offloading, three different queues are associated with each UE: a local queue at the electronic device side, a computation queue at the MEH and a downlink queue of results at the AP.

The local queue $Q_k^l$ at the electronic device is fed by the newly arrived tasks and drained by sending data via the uplink communication. Its evolution can be written as

$$Q_k^l(t+1) = \max\left(0, Q_k^l(t) - \tau R_k^u(t)I_A(t)\right) + A_k^{in}(t),$$

where $R_k^u(t)$ is the uplink data rate and $A_k^{in}(t)$ is the amount of newly arrived bits at the local queue of the k-th UE at the end of time slot $\tau$.

We assume that all UEs share the same CPU core at the MEH, with allocated CPU cycle frequency f(t) during time slot t. Also, let $\alpha_k(t)\tau$ be the CPU time dedicated to the k-th UE at time t, where the $\alpha_k(t)$ are non-negative coefficients such that $\sum_{k=1}^{K} \alpha_k(t) = 1$ for all t.

The local queue $Q_k^M$ at the MEH is fed by the tasks sent through the uplink communication and drained by computing the tasks. Its evolution can be written as:

$$Q_k^M(t+1) = \max\left(0, Q_k^M(t) - \tau f_k(t)J_k I_M(t)\right) + \min\left(I_A(t)\tau R_k^u(t), Q_k^l(t)\right),$$

where $J_k$ (in bits/CPU cycle) is the number of processed input bits per CPU cycle and $f_k(t) = \alpha_k(t)f(t)$.

The local queue $Q_k^A$ at the AP is fed by the results of the computed tasks and drained by sending the results through the downlink communication. It can be written as:

$$Q_k^A(t+1) = \max\left(0, Q_k^A(t) - \tau R_k^d(t)I_M(t)\right) + A_k^{out}(t),$$

where $A_k^{out}(t)$ are the new computed results. Note that $A_k^{out}(t)$ is greater than 0 if and only if $f_k(t) > 0$, i.e. computations are performed during time slot *t* for UE *k*.

Then, the overall delay of the service is directly related to the length of the sum of the three queues, denoted as $Q_k^{tot}(t) = Q_k^l(t) + Q_k^M(t) + Q_k^A(t)$.

Energy minimization problem

The main goal of the scheduler is to minimize the overall average energy consumption while guaranteeing a certain out of service probability, defined as the probability that $Q_k^{tot}(t)$ exceeds a predefined threshold $Q_k^{max}$.

Since $\Pr\{Q_k^{tot}(t) > Q_k^{\max}\} = \mathbb{E}\{u(Q_k^{tot}(t) - Q_k^{\max})\}$, where *u*{·} is the unitary step function, the long-term reliability constraint can be written as follows:

$$P_k^{out} = \lim_{T \to \infty} \frac{1}{T} \sum_{t=1}^{T} \mathbb{E}\{u(Q_k^{tot}(t) - Q_k^{\max})\} \leq \epsilon_k, \forall k.$$

Here the constraint on the quality of service is imposed as a (probabilistic) bound on the total length of the queues. It is an efficient way to control the overall delay or the global resource outage probability, without forcing stricter and too constraining bounds on each of the three queues. Furthermore, to enlarge the flexibility of the optimization design, a weighted version of the network energy expenditure is considered, given by:

$$E_{\text{tot}}^{w}(t) = \alpha(E_{\text{A}}(t) + E_{\text{M}}(t)) + (1 - \alpha)E_{\text{U}}(t),$$

where $\alpha \in [0,1]$ is the parameter that can be tuned to assign more importance to the network's or the UEs' energy consumption. Here the objective of the optimization is then to minimize the long-term weighted total energy, averaged over the unknown random distributions of the offloading inputs and outputs at time $t$ and the channel quality. Overall, the problem can be cast as:

$$\min_{\boldsymbol{\Omega}(t)} \quad \lim_{T \to \infty} \frac{1}{T} \sum_{t=1}^{T} \mathbb{E}\{E_{\text{tot}}^{w}(t)\} \qquad\qquad (\mathcal{P}_1)$$

subject to

$$\lim_{T \to \infty} \frac{1}{T} \sum_{t=1}^{T} \mathbb{E}\{u(Q_k^{\text{tot}}(t) - Q_k^{\max})\} \leq \epsilon_k, \qquad \forall k;$$

$$R_k^{\text{d}}(t) \geq 0, \qquad \forall k, t;$$

$$\sum_{k=1}^{K} \frac{B_k^{\text{d}} N_0}{h_k^{\text{d}}(t)} \left( \exp\left( \frac{R_k^{\text{d}}(t)\log(2)}{B_k^{\text{d}}} \right) - 1 \right) \leq P_{\max} I_{\text{A}}(t), \forall t;$$

$$0 \leq R_k^{\text{u}}(t) \leq R_{k,\max}^{\text{u}}(t) I_{\text{A}}(t), \qquad \forall k, t;$$

$$0 \leq f_k(t) \leq f_{\max} I_{\text{M}}(t), \qquad \forall k, t;$$

$$\sum_{k=1}^{K} f_k(t) \leq f_{\max}, \qquad \forall t;$$

where the expectation is taken with respect to the random channel states and task arrivals, and the set of optimization variables is

$$\boldsymbol{\Omega}(t) = \left( \{R_k^{\text{u}}(t)\}_{k=1}^{K}, \{f_k(t)\}_{k=1}^{K}, \{R_k^{\text{d}}(t)\}_{k=1}^{K}, I_A(t), I_M(t) \right)$$

$f_{max}$ is the MEH's maximum computational capacity, whereas $R_{k,max}^{u}(t)$ is the maximum achievable rate of the k-th UE during time slot t, obtained with the maximum user transmit power.

The solution of the proposed optimization problem passes through an online learning algorithm, which allows to allocate resources such that the reliability constraints are guaranteed and, under some mild assumptions, the solution is globally optimal. Learning the resource allocation strategy is fundamental in the cases in which we do not assume any knowledge on the statistics of the radio channels, the input and the output task arrivals. In particular, leveraging the tools of stochastic optimization, it is possible to solve a deterministic problem in each time slot that guarantees long-term reliability constraints. In particular, the reliability constraint can be handled by introducing a virtual queue $Z_k(t)$,

which evolves as follows:

$$Z_k(t+1) = \max(0, Z_k(t) + \mu \cdot [u(Q_k^{tot}(t+1) - Q_k^{max}) - \epsilon_k]),$$

so that $Z_k(t)$ increases when the QoS constraint (here the maximum queue length) is violated, and $\mu$ is a parameter used to control the convergence of the algorithm. It can be proved that the mean rate stability of $Z_k(t)$, defined as

$$\lim_{T \to \infty} \mathbb{E}\{Z_k(t)\}/T = 0,$$

ensures the reliability constraint. The mean rate stability can be achieved through a suitable Lyapunov function, defined as follows: $L(\mathbf{Z}(t)) = \frac{1}{2}\sum_k Z_k^2(t)$ and minimizing the Lyapunov drift defined as

$$\Delta(\mathbf{Z}(t)) = \mathbb{E}\{L(\mathbf{Z}(t+1)) - L(\mathbf{Z}(t)) \mid \mathbf{Z}(t)\}.$$

The Lyapunov drift measures the expected change in $L(\mathbf{Z}(t))$ over one slot, given the current queue state $\mathbf{Z}(t)$. To incorporate the energy expenditure in the optimization, the scheduler uses a penalized version of the Lyapunov drift (drift-plus-penalty function), defined as $\Delta_{\mathrm{p}}(\mathbf{Z}(t)) = \Delta(\mathbf{Z}(t)) + VE_{tot}^w(t),$ where the penalty is the joint energy consumption weighted by a V parameter which is used to control the trade-off.

The algorithm minimizes an upper bound of the drift-plus-penalty function in each time slot, thus guaranteeing the reliability constraint. In particular, the per-slot optimization problem can be written as follows:

$$\min_{\mathbf{\Omega}(t)} \quad VE_{\mathrm{tot}}^w(t) + \sum_{k=1}^{K} Z_k(t)\xi_k(t) \qquad (\mathcal{P}_2)$$

subject to

$$(a) \; \xi_k(t) \geq \max(0, \delta_k(t)), \quad \forall k, t;$$

$$(b) \; \xi_k(t) \geq Q_k^l(t) - \tau R_k^{\mathrm{u}}(t)I_{\mathrm{A}}(t) + \delta_k(t), \quad \forall k, t;$$

$$(c) \; \xi_k(t) \geq Q_k^{\mathrm{M}}(t) - \tau f_k(t)J_k I_{\mathrm{M}}(t) + \delta_k(t), \quad \forall k, t;$$

$$(d) \; \xi_k(t) \geq Q_k^{\mathrm{A}}(t) - \tau R_k^{\mathrm{d}}(t)I_{\mathrm{A}}(t) + \delta_k(t), \quad \forall k, t;$$

$$(e) \; \xi_k(t) \geq Q_k^l(t) - \tau R_k^{\mathrm{u}}(t)I_{\mathrm{A}}(t) + Q_k^{\mathrm{M}}(t) \\ -\tau f_k(t)J_k I_{\mathrm{M}}(t) + \delta_k(t), \; \forall k, t;$$

$$(f) \; \xi_k(t) \geq Q_k^l(t) - \tau(R_k^{\mathrm{u}}(t) + R_k^{\mathrm{d}}(t))I_{\mathrm{A}}(t) \\ +Q_k^{\mathrm{A}}(t) + \delta_k(t), \quad \forall k, t;$$

$$(g) \; \xi_k(t) \geq Q_k^{\mathrm{M}}(t) - \tau f_k(t)J_k I_{\mathrm{M}}(t) + Q_k^{\mathrm{A}}(t) \\ -\tau R_k^{\mathrm{d}}(t)I_{\mathrm{A}}(t) + \delta_k(t), \quad \forall k, t;$$

$$(h)\ \xi_k(t) \geq Q_k^l(t) - \tau(R_k^{\mathrm{u}}(t) + R_k^{\mathrm{d}}(t))I_{\mathrm{A}}(t) + \delta_k(t)$$
$$+Q_k^{\mathrm{M}}(t) - \tau f_k(t)J_k I_{\mathrm{M}}(t) + Q_k^{\mathrm{A}}(t),\ \forall k, t;$$

$$(i)\ R_k^{\mathrm{d}}(t) \geq 0, \qquad \forall k, t;$$

$$(l)\ \sum_k \frac{B_k^{\mathrm{d}} N_0}{h_k^{\mathrm{d}}(t)} \left( \exp\left( \frac{R_k^{\mathrm{d}}(t)\log(2)}{B_k^{\mathrm{d}}} \right) - 1 \right) \leq P_{\max} I_{\mathrm{A}}(t), \forall t;$$

$$(m)\ 0 \leq R_k^{u}(t) \leq R_{k,\max}^{u}(t)I_{\mathrm{A}}(t), \qquad \forall k, t;$$

$$(n)\ 0 \leq f_k(t) \leq f_{\max} I_{\mathrm{M}}(t), \qquad \forall k, t;$$

$$(o)\ \sum_k f_k(t) \leq f_{\max}, \qquad \forall t.$$

where $\xi_k(t)$ is an auxiliary variable used to make the problem differentiable, whereas, $\delta_k(t) = A_k^{in}(t) + \tau R_{k,max}^{u}(t) + A_k^{out}(t) - Q_k^{max} + 1$. This is a mixed integer non-linear programming problem. However, to get rid of the two binary variables $I_A(t)$ and $I_M(t)$, an exhaustive search over the only four possible values can be performed. Hence said optimization problem solution finding comprises, at the beginning of each of the consecutive time slots, duplicating the optimization problem into sub-problems for which the mode, active or sleeping, in which each the APs and MEHs is to be switched during the time slot is previously set and solving the sub-problems.

After fixing the binary variables, all the resulting sub-problems are convex and differentiable, and can be solved via efficient numerical tools. Furthermore, the problem with $I_A(t) = I_M(t) = 0$ is trivial, since its solution for all k is obviously $R_k^u(t) = R_k^d(t) = f_k(t) = 0$, and $\xi_k(t) = \max\left(0, Q_k^l(t) + Q_k^M(t) + Q_k^A(t) + \delta_k(t)\right)$. Therefore, at each time slot, only three convex optimization problems need to be solved and finally the best (among four) solution is chosen. Whenever the task input and output sizes and the radio channel gains are independent and identically distributed over different time slots, solving (P2) in each time slot asymptotically achieves the optimal value of the objective function of the original problem (P1) as V increases, while guaranteeing the mean rate stability of the virtual queues, thus ensuring the reliability constraint.

The parameter V of the objective function of (P2) determines the convergence time of the method towards the optimal solution. The choice of V, which can be fixed depending on similar criteria as for $\alpha$, also entails the "degree of sub-optimality" of the method. Namely, the smaller V, the faster the convergence of the method at the expense of a higher sub-optimality of the solution.

As shown above, in an embodiment, the method implements a dynamic resource allocation and duty cycle scheduling, based on slot-by-slot decisions, which leads to the optimisation of the overall average energy. This is done via stochastic Lyapunov optimization techniques, which are very suitable to deal with the dynamic fluctuations of the unknown context parameters. In particular, the invention exploits only the knowledge of the instantaneous realizations of the random channels and computational task arrivals, and does not need to predict or estimate their global long-term statistics. This simplifies the implementation.

The invention also relates to a computer-implemented scheduler configured to perform the communication and computation resources allocation of the method according to the invention. The invention also relates to a wireless network including at least one electronic device that can offload a computing task, at least one access terminal which can be switched between an active mode and a sleeping mode and at least one edge computation unit which can compute an offloaded computing task and can be switched between an active mode and a sleeping mode, the wireless network further comprises the scheduling circuit to perform the communication and computation resources allocation of the method according to the invention.

**Claims**

1.  Multi-access edge computing method having a required Quality of Service, QoS, and being implemented in a wireless network which includes at least one electronic device (UE) that can offload a computing task, at least one access terminal (AP) which can be switched between an active mode and a sleeping mode and at least one edge computation unit (MEH) which can compute an offloaded computing task and be switched between an active mode and a sleeping mode,
    said method comprising allocating, by a computer-implemented scheduler (SC), communication and computation resources by switching the at least one access terminal (AP) and the at least one edge computation unit (MEH) between their respective active or sleeping modes, said allocating being performed to minimize a joint energy consumption while guaranteeing the required QoS, the joint energy consumption corresponding to $\alpha E_A + \beta E_M + \gamma E_U$ with $\alpha$, $\beta$ and $\gamma$ each between 0 and 1, $E_U$ the energy consumption of the at least one electronic device (UE), $E_A$ the energy consumption of the at least one access point (AP) and $E_M$ the energy consumption of the at least one edge computing unit (MEH).

2.  Multi-access edge computing method according to claim 1, wherein said allocating comprises finding, at consecutive time slots, a solution to an optimization problem having the required QoS as constraint, said optimization problem being the minimization of the joint energy consumption, wherein said solution includes the mode, active or sleeping, in which each of the at least one access terminal and the at least one edge computing unit is to be switched during the time slot and wherein switching the at least one access terminal and the at least one edge computation unit between their respective active or sleeping modes is performed at each of the consecutive time slots based on the corresponding solution.

3.  Multi-access edge computing method according to claim 2, wherein said finding comprises performing a Lyapunov optimization considering for each of the at least one electronic device a queue which increases when a constraint on the required QoS is violated.

4.  Multi-access edge computing method according to claim 3, wherein performing the Lyapunov optimization comprises minimizing a drift-plus-penalty function in each time slot, wherein the penalty is derived from the joint energy consumption

5.  Multi-access edge computing method according to any one of claims 2 to 4, wherein said finding comprises, at the beginning of each of the consecutive time slots, duplicating the optimization problem into sub-problems for which the mode, active or sleeping, in which each the APs and MEHs is to be switched during the time slot is previously set and solving the sub-problems.

6.  Multi-access edge computing method according to any one of claims 2 to 5, wherein at each of the consecutive time slots said finding comprises:

    - the current mode, active or sleeping, of each of the at least one access terminal and the at least one edge computation unit ($I_A(t)$, $I_M(t)$);
    - a current uplink transmission rate $\left(R_k^u(t)\right)$ and a current downlink transmission rate $\left(R_k^d(t)\right)$ for wireless communications between each of the at least one electronic device and each of the at least one access terminal;
    - for each of the at least one edge computing unit, a current computational power ($f_k(t)$) assigned to each of the at least one electronic device.

7.  Multi-access edge computing method according to any one of claims 1 to 6, wherein the required QoS is guaranteed if a computation offloading delay is below a threshold.

8.  Multi-access edge computing method according to claim 7, wherein the computation offloading delay is a per-task delay or an average delay calculated over several tasks.

9.  Multi-access edge computing method according to any one of claims 1 to 6, wherein the required QoS is guaranteed if a computation offloading workload is below a threshold.

10. Multi-access edge computing method according to claim 9, wherein the computation offloading workload is a cumulative workload of the at least one electronic device, the at least one access terminal and the at least one edge computation unit.

11. Multi-access edge computing method according to claim 10, wherein the workload of the at least one electronic device is a length of a queue of offloaded data waiting to be transmitted to the at least one access terminal, the workload of the at least one access terminal is a length of a queue of computation result data waiting to be transmitted to the at least one electronic device and the workload of the at least one edge computing unit is a length of a queue of offloaded data waiting to be processed, and wherein the cumulative workload is the cumulative length of all the queues.

12. Multi-access edge computing method according to any one of claims 1 to 11, wherein $\alpha=\beta$ and $\gamma=1-\alpha$ or wherein $\alpha=\delta*\varepsilon$, $\beta=\delta*(1-\varepsilon)$ and $\gamma=1-\delta$ with $\delta$ and $\varepsilon$ each between 0 and 1.

13. Computer-implemented scheduler configured to perform the communication and computation resources allocation of the method according to any one of claims 1 to 12.

14. Wireless network including at least one electronic device that can offload a computing task, at least one access terminal which can be switched between an active mode and a sleeping mode and at least one edge computation unit which can compute an offloaded computing task and can be switched between an active mode and a sleeping mode, **characterized in that** it further comprises a computer-implemented scheduler according to claim 13.

FIG. 1

EP 3 826 368 A1

FIG. 2

FIG. 3

QoS

$\alpha$

$\beta$

$I_A(t_n)$

$I_M(t_n)$

Communication $RAP(t_{n0})$

$\{R_k^u(t_n)\}_{k=1}^K$

Computation $RAP(t_{n0})$

$\{R_k^d(t_n)\}_{k=1}^K$

$\{f_k(t_n)\}_{k=1}^K$

SC

# FIG. 4

FIG. 5

EP 3 826 368 A1

Europäisches
Patentamt

European
Patent Office

Office européen
des brevets

# EUROPEAN SEARCH REPORT

Application Number

EP 19 30 6484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YU BOWEN ET AL: "U-MEC: Energy-Efficient Mobile Edge Computing for IoT Applications in Ultra Dense Networks", 13 June 2018 (2018-06-13), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 622 - 634, XP047475268, ISBN: 978-3-642-17318-9 [retrieved on 2018-06-13] * the whole document * | 1-14 | INV. H04W52/02 |
| Y,D | CHANG PEILIANG ET AL: "Resource Provision for Energy-Efficient Mobile Edge Computing Systems", 2018 IEEE GLOBAL COMMUNICATIONS CONFERENCE (GLOBECOM), IEEE, 9 December 2018 (2018-12-09), pages 1-6, XP033520163, DOI: 10.1109/GLOCOM.2018.8648008 [retrieved on 2019-02-20] * the whole document * | 1-14 | |
| A,D | CHEN LIXING ET AL: "Energy efficient mobile edge computing in dense cellular networks", 2017 IEEE INTERNATIONAL CONFERENCE ON COMMUNICATIONS (ICC), IEEE, 21 May 2017 (2017-05-21), pages 1-6, XP033132998, DOI: 10.1109/ICC.2017.7997128 [retrieved on 2017-07-28] * the whole document * | 1-14 | TECHNICAL FIELDS SEARCHED (IPC) H04W |

The present search report has been drawn up for all claims

| Place of search | Date of completion of the search | Examiner |
|---|---|---|
| The Hague | 11 May 2020 | Lindhardt, Uffe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. CHEN ; S. ZHOU ; J. XU.** Energy efficient mobile edge computing in dense cellular networks. *Proc. IEEE ICC,* May 2017, 1-6
- **S. WANG ; X. ZHANG ; Z. YAN ; W. WENBO.** Cooperative edge computing with sleep control under nonuniform traffic in mobile edge networks. *IEEE Internet of Things J.,* June 2019, vol. 6 (3
- **P. CHANG ; G. MIAO.** Resource provision for energy-efficient mobile edge computing systems. *Proc. of IEEE GLOBECOM,* 2018, 1-6